# EUROPEAN PATENT APPLICATION

(11) **EP 2 112 371 A1**
(43) Date of publication of application: **28.10.2009**
(21) Application number: 08103694.9
(22) Date of filing: 23.04.2008
(51) Int. Cl.: F03B 13/00

(54) **Method and apparatus for powering fluid transport related electrical devices**

(71) Applicant: Acque Ingegneria S.r.l., 56121 Ospedaletto (PI) (IT); Bre Elettronica S.n.C., 56010 Pisa (IT)
(72) Inventor: Rindi, Piero, 56122, PISA (IT)
(74) Representative: Celestino, Marco

(57) **Abstract**

A method, an apparatus and a hydroelectric generator (35) for powering electric fluid transport related electric devices, for example an actuator (30) of a pressure reduction valve (17) in a duct (16) of a hydraulic network, and a RTU (33) for remote controlling by an instrument (40) or a console (39). The method provides the identification of two points (34a-b) of the duct among which a pressure difference can be established, the choice of an hydroelectric generator (35), adapted to provide with such pressure difference a power set between 2 and 500 W, said generator comprising a turbine (36a) and an alternator (36b), a bypass (37a-b), hydraulic and electric connections to the generator (35), preferably with an accumulator (32). The generator (35) is a unit that can be pre-assembled with the actuator (30). The invention solves the problem of a regular and continuous supply of electric energy for an electric equipment associated to a duct and distant from an electric network, by means of components of limited cost and in a way protected form damages and weather.

## Description

### Field of the invention

The present invention relates to a method and to an apparatus for supplying electricity to fluid transport related electric devices, installed in zones that do not have electric networks.

Exemplary electric devices having this problem are for example: electric actuators of valves, or other electric devices for automatic remote control of hydraulic plants, measuring instruments of process variables, transmitters of analog or digital signals, circuits for acquisition, control and transmission of such signals whose operation requires a low supply of electric energy.

The electric devices, for example, can belong to plants such as networks of water ducts for civil and industrial uses, sewer systems, plants for handling fluids in general, oil pipelines.

### Background of the invention

In fluid transport plants, for example aqueducts, the installation is frequent, in areas without electric networks, of equipment such as hydraulic devices and instruments.

New electric installations to reach such equipment can be too much expensive. In fact laying new power lines, with annexed auxiliary systems, voltage transformers and control devices, for signalling and protecting from failures and damages, require a lot of specialized work and expensive material. Secondly, other costs arise for maintenance of the lines, and the installations are to be made in remote, difficult to reach and dangerous locations.

Known systems are commonly adopted to ensure the electric supply to electric devices of plants and to control remotely the devices, avoiding the difficulties above described, by generating electric energy in situ. In particular, solar cells are used.

Limits and drawbacks are known, however, that characterise the use of such systems.

Firstly, they comprise solar cells and relative auxiliary parts, which are expensive components, even if the power required is of limited amount.

Secondly, the supply of electric energy from solar cells is subject to well known limits owing to unforeseeable conditions, with possible discontinuity or particular absence of solar radiation. The latter can be affected for example by orography, weather, shadowing from vegetation, lack of solar radiation such as in tunnels, in particular in mountain regions. In addition, in case of fixed solar cells, i.e. without systems that follow the solar path, that would be useful in case of devices of small power, these drawbacks are further exacerbated.

Thirdly, the solar cells are visible owing to their exposition necessary for working properly, and are easily subject to theft or damage by people, animals or weather.

Fourthly, installation and maintenance workload of these devices is significant, owing to the value of the components and the specialization required to an operator.

Similarly, methods are well known that provide electric energy generators arranged locally and based on the conversion of wind energy, which owing to external moving parts require frequent maintenance; moreover, they are subject to weather conditions.

### Summary of the invention

It is therefore a feature of the invention to provide a method for supplying voltage fluid transport related electric devices, which can ensure regular availability and continuous of electric energy even without an electric network in the immediate vicinity.

It is then a feature of the invention to provide an apparatus that carries out this method and that comprises components of limited cost.

It is, furthermore, a feature of the invention to provide such an apparatus that does not require frequent or complicated maintenance or change of components.

It is a particular feature of the invention to provide such an apparatus that has limited size and slight visual impact, and that is in any case easily concealable to people and animals.

It is also a feature of the invention to provide such an apparatus that has means for protection from external damaging, and that in particular is adapted to be installed in buried position.

It is a further feature of the invention to provide such an apparatus that has limited environmental impact.

It is also a feature of the invention to provide a fluid transport related electric equipment that carries out this method.

These and other objects are achieved through a method for supplying electricity to fluid transport related electric equipment, this method providing the steps of:
- identification of a first and a second point of said duct near the equipment, between such points resulting in normal operation conditions of the duct a pressure difference larger than a minimum determined value,
- providing a hydroelectric generator having an inlet and an outlet, adapted to work with a pressure difference between the inlet and the outlet substantially equal to the pressure difference between the two points,
- creating a bypass between the first and the second point;
- introducing the hydroelectric generator along the bypass, so that a fluid flow is formed between the two points, and, in particular, from the first point to the second point respectively through i) a first portion of the bypass, ii) the inlet of the generator, iii) the generator, iv) the outlet of the generator and v) a second portion of the bypass, generating thus electric energy by the generator;
- electric connection of the generator with the electric equipment in order to supply the equipment with the electric energy delivered by the generator.

This way, an amount is exploited of the energy potential associated with the pressure difference between the two points for supplying voltage the electric equipment that is located relatively close to them. This is useful, in particular when the equipment is an auxiliary electric equipment of an hydraulic plant, for example an aqueduct, a sewer system, a oil pipeline, is far from an electric network.

Advantageously, the generator is adapted to supply an electric power set between 2 and 500 watt, exploiting said pressure difference. This ensures an availability of the energy source in particular for driving and monitoring remote devices of a plant.

Furthermore, the electric power supplied is suited to the energy requisites of the fluid transport related electric devices, such as actuators of valves and other devices for automatic adjustment and the remote control of hydraulic plants, measuring instruments of process variables, transmitters of analog or digital signals, circuits for acquisition, control and transmission of such signals.

In any case, the presence of the fluid to transport ensures the availability of the energy source used for generating electric energy, independently from other external events, differently from solar cells or wind generators.

In a possible implementation of the method, the pressure difference is responsive to the head loss associated with the movement of the fluid through a singularity of the duct; for example, this singularity can be a change of the shape or of the size of the cross section of the duct, or a part of an equipment crossed or concerned with the fluid, or a combination thereof.

In particular, a wide varieties of equipment is known that can lead to singularity having a first and a second point useful for the method according to the invention, such as mechanical parts that introduce a flow resistance in the fluid flow for adjusting a parameter of the flow, in particular the flow rate or the pressure, or instruments whose operation causes a flow resistance for measuring a parameter, in particular the flow rate.

In particular the singularity can be present in an equipment selected from the group comprised of:
- a reduction valve or adjustment of the pressure,
- a valve for adjustment of the flow rate,
- a tool for measuring the flow rate,
- a filter.

Advantageously, the method provides furthermore:
- a step of storing the generated electric energy, for example in batteries of known type,
- a step of supplying the energy accumulated to said equipment.

This allows using a generator of small power, in particular when said equipment is used occasionally.

In particular the electric energy is supplied by the generator in the shape of alternating voltage. In case of accumulation step, the alternating voltage can be supplied by means of an inverter.

Advantageously, the method provides a step of reversing the inlet and the outlet of the hydroelectric generator, this step of inversion being actuated automatically according to the flow direction of the fluid in the duct.

The objects of the invention are also achieved through an apparatus for supplying electricity to fluid transport related electric devices through a duct, this apparatus comprising:
- a bypass arranged between a first and a second point of the duct, between such points resulting in normal operation conditions of the duct a pressure difference larger than a minimum determined value,
- a hydroelectric generator having an inlet and an outlet, adapted to work with a pressure difference between the inlet and the outlet substantially equal to the pressure difference between the two points, the generator being arranged along the bypass such that it is crossed by a flow of the fluid proceeding from the first point to the second point,
- means for electric connection of the generator with the electric equipment in order to supply the equipment with the electric energy delivered by the generator,
whose main feature is that the generator
a) comprises means for converting a part of potential energy causing the pressure difference between the two points, and that
b) is adapted to supply an electric power set between 2 and 500 watt obtained from said pressure difference.

Advantageously, the apparatus provides means for accumulating the generated electric energy, as well as means for supplying the accumulated energy to fluid transport related electric devices.

Preferably, the means for accumulating comprises one or more batteries having nominal voltage equal to 24 volt or to a submultiple of 24 volt.

Advantageously, the apparatus provides means for reversing the inlet and the outlet of the hydroelectric generator, the means for reversing activated automatically according to the flow direction of the fluid.

The objects of the invention are also achieved through an hydroelectric generator comprising:
- a hydraulic turbine,
- an alternator, i.e. a device adapted to supply an electric voltage that is variable periodically in intensity and sign,
- means for transmitting a movement from the turbine to the alternator,
whose main feature is of being adapted to supply a power set between 2 and 500 W at a minimum operation pressure.

In particular this minimum operation pressure is set between 0,8 and 2 bar and the nominal power supplied at the minimum working pressure is set between 2 and 10 watt.

Advantageously, the generator comprises means for adjusting the frequency, in particular between 45 and 65 Hz, this range of values comprising the values of frequency accepted by conventional electrical devices and accumulators.

Advantageously, the generator comprises means for adjusting the supplied electric voltage.

In particular the supplied electric voltage can be set between 12 and 24 V, values of voltage compatible with common batteries used as accumulators of energy.

Preferably, the alternator is enclosed in a box resistant to the humidity, to allow the arrangement of the generator in humid locations, and to allow, in particular, to be concealed under ground, protecting the electric parts. In this way it is limited the possibility of damages owing to people or animals.

In particular the protective box comprises an outer wall of stainless steel or other material resistant to the corrosion, and a filling of epoxy resin. The generator is then adapted to be used in the apparatus according to the invention.

In particular a similar apparatus is advantageously used for operating a reduction valve of the pressure. The adjustment of the pressure is in fact one of the occurrences most frequent and critic, in particular, in the operation of aqueducts: values of pressure corresponding to heads of hundreds of metres would involve in fact too high pressures in the installations arranged downstream, which need a reduction to avoid damages to the aqueduct equipment.

The objects of the invention are then achieved through a unit for adjusting the pressure in a hydraulic duct comprising:
- a body valve,
- a electric actuator requiring a continuous voltage selected from the group comprised of: 12 volt and 24 volt;
- an apparatus according to the invention, comprising means for accumulating electric energy for supplying voltage to said actuator
whose main feature is that said apparatus is a block that is pre-assembled integral to said actuator.

This configuration is also advantageous for savings related to producing, mounting, storing and repairing the pressure adjustment units. In particular in case of failure of a component of the apparatus or the actuator, the integral structure of these two elements suggests replacement of the whole block, which can then be checked in its entirety, without a temporary removal of the valve.

### Brief description of the drawings

The invention will be made clearer with the following description of an exemplary embodiment thereof, exemplifying but not limitative, with reference to the attached drawings wherein:
- Fig. 1 is a flow-sheet that shows the steps of an exemplary implementation of the method and of the operation of the apparatus according to the invention;
- Fig. 2 is a diagrammatical view that represents the components of an apparatus for remote controlling process variables, in this case the flow rate in a duct of an aqueduct;
- Fig. 3 is a diagrammatical view similar to that of Fig. 2, relative to reduction of the pressure;
- Fig. 4 is a view of a hydroelectric generator belonging to the apparatus according to the invention;
- Figs. 5A-B show respectively the turbo-alternator and the box of the turbine of the hydroelectric generator of Fig. 4;
- Fig. 6 shows characteristic diagrams of a generator of the type shown in Figs. 4 and 5;
- Fig. 7 shows a flow rate adjusting unit comprising an adjustment valve preassembled with an hydroelectric generator.

### Description of preferred exemplary embodiments

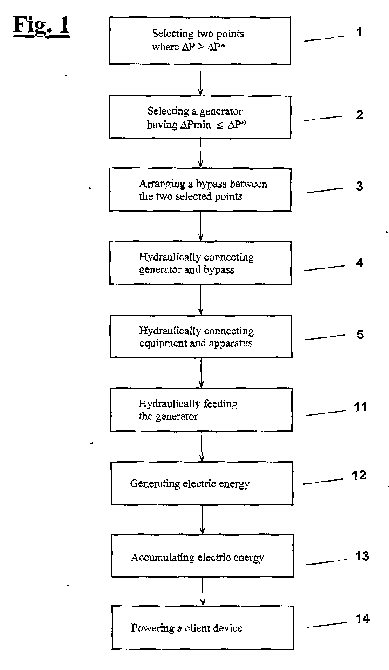

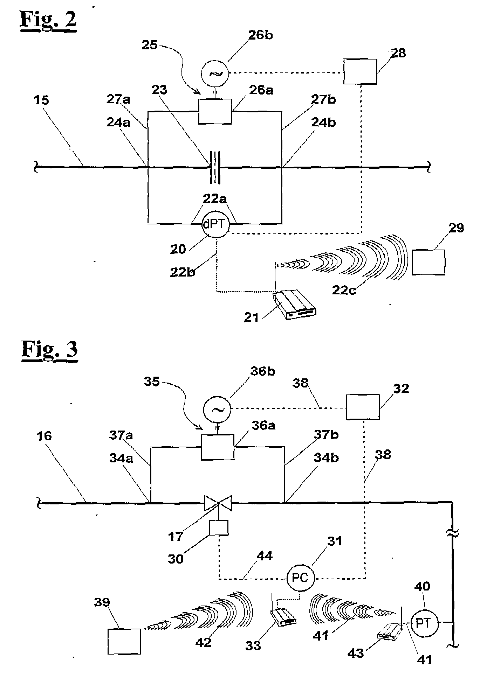

With reference to Figs. 1 and 2, an implementation is described of the method and of the apparatus, according to the invention, for supplying voltage to a transmitter of signals of differential pressure 20 and a RTU - Remote Terminal Unit 21. Such devices belong for example to a system for remotely reading the flow rate in a hydraulic duct 15 located in a place not reached by an electric network. The pressure signal transmitter comprises means adapted to convert the signal of differential pressure 22a into an electric signal 22b. RTU 21 comprises acquisition and memorization means of the signal 22b, as well as a MODEM for conversion and transmission of the signal 22b to a remote console through a GPRS network.

Firstly, an identification 1 is carried out of two points 24a and 24b existing near calibrated flange 23, respectively in an upstream section and in a downstream section with respect to it, and at a distance such that the signal 22a is not influenced by the turbulence caused by calibrated flange 23; advantageously the two points 24a and 24b belong to respective sections where measuring sensors of the instrument are arranged. Then, a choice 2 is made of a hydroelectric generator 25, comprising a turbine 26a and an alternator 26b. The generator must provide electric power exploiting a pressure difference between the inlet and the outlet due to the flow resistance caused by the flange 23, according to a minimum predictable flow rate in the duct.

The, a step 3 of creating a bypass 27a-b by a duct 20 between the points 24a and 24b, having suitable cross section; Then, a hydraulic connection 4 is made of generator 25 with the two branches of the bypass, as well as an electric connection 5 is made between generator 25 and an accumulator 28 and between the latter and transmitter 21 associated with the flange, which carries out a conversion of the pressure signal into an electric signal that can be acquired by RTU 21.

Then, an flow 11 reaches the generator, and a generation 12 occurs of voltage, which is transmitted for an accumulation 13 of electric energy to batteries 28, and then voltage is supplied 14 to transmitter 20 of RTU 21.

RTU 21 carries out the acquisition and the adjustment of the signal as well as its transmission, in the form of data packets 22c to a remote console 29, according to a timing or a logic operated by program means integrated in RTU 21. In remote console 29 the data 22c are processed by program means, not shown, and displayed as flow rate values.

In a second embodiment, the apparatus according to the invention is used for supplying voltage to an electric actuator 30 of a valve 17 for reduction of pressure, as well to a control unit 31 having a microprocessor. Valve 17 is installed in a section of a duct 16, such as in mountain regions, in a position not reached by an electric network, closely to control unit 31.

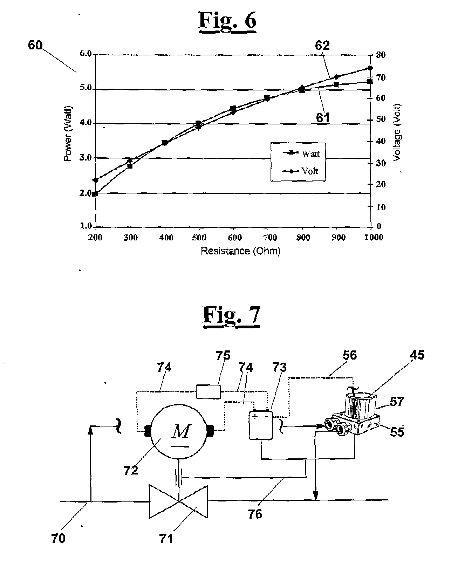

Reduction valve 17 causes, at a minimum flow rate statistically predictable in duct 16, a head loss of about one bar. Two points 34a and 34b respectively upstream and downstream of valve 17, are connected by a bypass 37a-b with the inlet and with the outlet of an hydroelectric generator 35, chosen such that it can work with this minimum value of pressure difference between the inlet and the outlet. Generator 35, comprising a turbine 36a and an alternator 36b, is mounted integral to actuator 30 of valve 17, as shown in Fig. 7. Electric connections 38 are, furthermore, arranged for supplying voltage to accumulator 32, and then to control unit 31 and actuator 30, having a 24V DC motor. Control unit 31 acquires, via GPRS through an RTU 33, a set-point value 42 generated in a remote console 39, and a pressure signal 41 generated by a sensor located in a downstream section of the duct or of the hydraulic network and associated with a transmitter 40 and to a second RTU 43. The control unit makes a comparison and obtains an electric signal 44 that operates actuator 30.

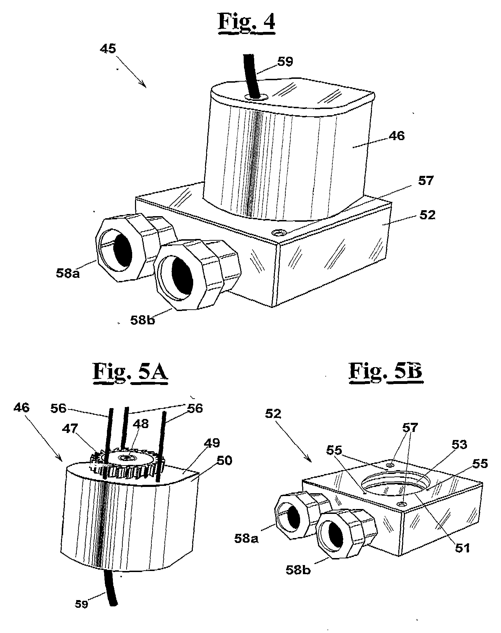

With reference to Figs. 4 and 5A-B, a hydroelectric generator 45 according to the invention is described, suitable to generate a power of 5 watt on a load of 1000 Ohm (see also Fig. 6) with a differential of pressure of 2 bar between inlet and outlet. In Fig. 5A turbo-alternator 46 is shown comprising a turbine of which the impeller 47 is visible, for example of PVC, connected to the shaft ends 48. This protrudes from the armature of the alternator, not visible in Fig. since embedded in a filling 49, for example of epoxy resin. The whole is enclosed in a coating 50 of stainless steel. The impeller 47 is housed in a central hole 51 of a box 52 for the turbine (Fig. 5B), more precisely in a slot 53 communicating in a way not visible in the figure with the two hydraulic connections of the turbine. An O-ring not shown in the figure ensures the water tight. The box is connected to turbo-alternator 46 by three through holes 55 and the three studs 56 also embedded in filling 49, whereas further through holes 57 are arranged for fixing the hydroelectric generator 45 to a support, for example by means of a screw threaded U-bolt. Two connections 58a-b, of type DN20, UNI 9368 of brass, with ring nut and washers, are provided respectively at the inlet and the outlet of the box 51 of the turbine for connection to a bypass of a duct. Finally, an electric cable 59 is visible for supplying voltage batteries or the equipment, which are also partially embedded in the insulation resin 49.

In Fig. 6 characteristic diagrams are shown of the hydroelectric generator of the type of Figs. 4 and 5, in particular depicting a curve 61 of the value of the voltage supplied expressed in Volts responsive to the load on the alternator expressed in Ohm; furthermore, a curve 62 is depicted that provides the power supplied expressed in Watt, always responsive to the load.

In Fig. 7 a unit is diagrammatically shown for adjusting the pressure comprising a valve body 71 and an electric actuator consisting of a DC motor 72. Integral to the support 76 of the actuator an appliance is installed comprising the generator 45 shown in Fig. 4, and an accumulator 73 supplied by the generator 45 by a cable 56. The valve can be installed along a duct 70, also shown, in which are made two fittings connected to the inlet and the outlet of turbine 55. Accumulator 73 supplies motor 72 through an electric connection 74, comprising a switch 75 operated by a microprocessor similar to control unit 31 of Fig. 3, in order to switch the valve and then maintain a determined downstream pressure, as set by the control unit not shown.

The foregoing description of a specific embodiment will so fully reveal the invention according to the conceptual point of view, so that others, by applying current knowledge, will be able to modify and/or adapt for various applications such an embodiment without further research and without parting from the invention, and it is therefore to be understood that such adaptations and modifications will have to be considered as equivalent to the specific embodiment. The means and the materials to realise the different functions described herein could have a different nature without, for this reason, departing from the field of the invention. It is to be understood that the phraseology or terminology employed herein is for the purpose of description and not of limitation.

## Claims

1. Method for powering a fluid transport related electric equipment associated to a duct, said method providing the steps of:
- identifying a first and a second point of said duct near said equipment, between said points resulting in normal operation of the duct a pressure difference larger than a minimum determined value,
- providing a hydroelectric generator having an inlet and an outlet, adapted to work with a pressure difference between the inlet and the outlet substantially equal to the pressure difference between said points,
- creating a bypass between said points;
- introducing said hydroelectric generator along said bypass, so that a fluid flow is formed between said points, and, in particular, from said first point to said second point respectively through i) a first portion of said bypass, ii) said inlet, iii) said generator, iv) said outlet and v) a second portion of said bypass, generating thus electric energy by said generator;
- electrically connecting said generator with said electric equipment in order to supply said equipment with the electric energy delivered by said generator.

2. Method according to claim 1, wherein said generator is adapted to supply an electric power set between 2 and 500 watt exploiting said pressure difference.

3. Method according to claim 1, wherein for adjusting said pressure difference a step is provided to control the head loss associated with the movement of said fluid through a singularity of the duct, said singularity being selected from the group comprised of:
- a change of the shape or of the size of the cross section of said duct;
- a part comprised in an equipment;
- a combination thereof.

4. Method according to claim 4, wherein said equipment is selected from the group comprised of:
- a valve for reduction or adjustment of pressure,
- a valve for adjusting the flow rate,
- a tool for measuring the flow rate,
- a filter.

5. Method according to claim 1, wherein a step is provided of reversing said inlet and of said outlet of said hydroelectric generator, said step of reversing being actuated automatically according to the flow direction of said fluid in said duct.

6. Apparatus for supplying electricity to fluid transport related electric devices associated to a duct, said apparatus comprising:
- a bypass arranged between a first and a second point of said duct, between said points resulting in normal operation of the duct a pressure difference larger than a minimum determined value,
- a hydroelectric generator having an inlet and an outlet, adapted to work with a pressure difference between the inlet and the outlet substantially equal to the pressure difference between said points, said generator being arranged along said bypass such that it is crossed by a flow of said fluid proceeding from said first point and towards said second point,
- means for electric connection of said generator with said electric equipment in order to supply said equipment with the electric energy delivered by said generator,
**characterised in that** said generator is adapted to convert an amount of the potential energy associated with said pressure difference and that said generator is adapted to supply an electric power set between 2 watt and 500 watt obtained from said pressure difference.

7. Apparatus according to claim 9, comprising:
- means for accumulating electric energy,
- means for conveying said electric energy from said means for accumulating to said equipment, wherein said means for accumulating comprises in particular one or more batteries having nominal voltage equal to 24 volt or to a submultiple of 24 volt.

8. Apparatus according to claim 9, wherein means are provided for reversing said inlet and of said outlet of said hydroelectric generator, said means for reversing activated automatically according to the flow direction of said fluid.

9. Hydroelectric generator, said generator having a minimum pressure difference of operation, comprising:
- a hydraulic turbine
- an alternator, i.e. a device adapted to make a voltage that is variable periodically in intensity and sign,
- means for transmitting a movement from said turbine to said alternator,
**characterised in that** of being adapted to supply a power set between 2 and 50 W at said minimum pressure difference, such that an equipment associated with the flow of fluid through a duct is operated by said power, according to the previous claims.

10. Hydroelectric generator according to claim 9, wherein said minimum pressure difference of operation is set between 0,5 bar and 2 bar.

11. Hydroelectric generator according to claim 9, wherein said power supplied at the conditions of minimum pressure difference of operation is set between 2 and 10 watt.

12. Hydroelectric generator according to claim 9, comprising means for adjusting said frequency, and said frequency changes between 45 and 65 Hz.

13. Hydroelectric generator according to claim 9, comprising means for adjusting said voltage, and said voltage is adjusted between 12 and 24 V.

14. Hydroelectric generator according to claim 9, wherein said alternator is enclosed in a protective box comprising a wrapper of stainless steel and a filling of epoxy resin.

15. Pressure adjusting unit associated to an hydraulic duct comprising:
- a valve body
- a electric actuator requiring a voltage,
- an apparatus according to claim 9 for supplying voltage to said actuator
**characterised in that** said apparatus is a block that is pre-assembled integral to said actuator.
